(19) Europäisches Patentamt
European Patent Office
Office européen des brevets

(11) Veröffentlichungsnummer : **0 300 420 B1**

(12) # EUROPÄISCHE PATENTSCHRIFT

(45) Veröffentlichungstag der Patentschrift : **04.09.91 Patentblatt 91/36**

(51) Int. Cl.$^5$ : **B05D 1/20**

(21) Anmeldenummer : **88111581.0**

(22) Anmeldetag : **19.07.88**

(54) **Verfahren zur Herstellung von dünnen Schichten und diese enthaltende mehrschichtige Elemente.**

(30) Priorität : **24.07.87 DE 3724542**

(43) Veröffentlichungstag der Anmeldung : **25.01.89 Patentblatt 89/04**

(45) Bekanntmachung des Hinweises auf die Patenterteilung : **04.09.91 Patentblatt 91/36**

(84) Benannte Vertragsstaaten : **AT BE CH DE ES FR GB IT LI NL SE**

(56) Entgegenhaltungen :
**THIN SOLID FILMS, Band 146, Nr. 2, 16. Januar 1987, Seiten 209-220, Elsevier Sequoia, NL; P. STROEVE et al.: "Langmuir-blodgett multilayers of polymer-merocyanine-dye mixtures"**
**ANGEWANDTE CHEMIE, Band 83, Nr. 17/18, 1971, Seiten 672-689; H. KUHN et al.: "Systeme aus monomolekularen Schichten-Zusammenbau und physikalisch-chemisches Verhalten"**

(73) Patentinhaber : **BASF Aktiengesellschaft**
**Carl-Bosch-Strasse 38**
**W-6700 Ludwigshafen (DE)**

(72) Erfinder : **Wegner, Gerhard, Prof. Dr.**
**Carl-Zuckmayer-Strasse 1**
**W-6500 Mainz-Drais (DE)**
Erfinder : **Duda, Gisela**
**Fritz-Kohl-Strasse 11**
**W-6500 Mainz (DE)**
Erfinder : **Bubeck, Christoph, Dr.**
**Bornweg 7**
**W-6228 Eltville 5 (DE)**
Erfinder : **Schouten, Arend Jan, Dr.**
**Groninger Weg 70a**
**NL-9321 TB Peize (NL)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

**Beschreibung**

Die Erfindung betrifft ein Verfahren zur Herstellung von dünnen Schichten mit einer definierten Konzentration an Farbstoff pro Flächeneinheit nach der Langmuir-Blodgett-Technik.

Die Erzeugung von mono- und multimolekularen Schichten nach der Langmuir-Blodgett-Technik ist seit langem bekannt.

Die Übertragung von Poly-γ-benzyl-L-glutamat bzw. von Poly-γ-methyl-L-glutamat-Monoschichten auf Germaniumsubstrate sowie die Untersuchung der Orientierung dieser Schichten mittels polarisierter IR-Spektroskopie wurde beispielsweise bereits von T. Takenada, K. Harada und M. Matsumoto in J.Coll.Int.Sci. 73, 569 (1979) bzw. von F. Takeda, M. Matsumoto, T. Takenaka und Y. Fujiyoshi in J.Coll.Int.Sci. 87, 220 (1981) beschrieben. Die Orientierung von Polyoctadecylmethacrylat und Polyoctadecylacrylat in Langmuir-Blodgett-Monoschichten untersuchten S.J. Mumby et al (Macromolecules 19, 1054 (1986)).

Amphiphile Farbstoffe in Schichten aus amphiphilen oberflächenaktiven Molekülen wurden von H. Kuhn und D. Möbius in Angewandte Chemie 83 (1971), Seiten 672ff beschrieben.

Aufgabe der vorliegenden Erfindung ist es, ein Verfahren aufzuzeigen, das es ermöglicht, dünne Schichten mit definierter Konzentration an oleophilen Farbstoffen nach der Langmuir-Blodgett-Technik auf feste Substrate aufzubringen und auf diese Weise gleichmäßige, über Farbstoffkonzentration und Schichtdicke kontrollierbar und reproduzierbar eingefärbte Schichten herzustellen.

Überraschenderweise gelingt dies dadurch, daß oleophile, in organischen mit Wasser nicht mischbaren Lösungsmitteln lösliche Farbstoffe im Gemisch mit der Lösung eines organischen Polymeren an der Grenzfläche Wasser/Luft gespreitet und die nach Verdunstung des organischen Lösungsmittels erhaltene Monoschicht nach der Langmuir-Blodgett-Technik auf einen festen Schichtträger übertragen wird.

Der oleophile Farbstoff liegt in der Monoschicht offensichtlich im Polymer eingebettet bzw. gelöst vor, d.h. man erhält als Monoschicht eine homogene Mischung von Farbstoff und Polymer. Dadurch ist es möglich, sowohl über die Variation der Farbstoffkonzentration als auch über die Schichtdicke (Anzahl der Monoschichten)gleichmäßige dünne Schichten mit einer definierten Konzentration an Farbstoff pro Flächeneinheit reproduzierbar herzustellen.

Gegenstand der vorliegenden Erfindung ist ein Verfahren zur Herstellung von dünnen Schichten mit einer definierten Konzentration an Farbstoff pro Flächeneinheit, das dadurch gekennzeichnet ist, daß ein oleophiler Farbstoff ohne ionische Gruppen, der in organischen, mit Wasser nicht mischbaren Lösungsmitteln löslich ist, und ein organisches Polymeres in einem organischen, mit Wasser nicht mischbaren Lösungsmittel gelöst, an der Grenzfläche Wasser/Luft gespreitet und nach Verdunstung des Lösungsmittels in üblicher Weise nach der Langmuir-Blodgett-Technik auf einen festen Schichtträger übertragen wird, wobei als organische Polymere Polykondensate mit langkettigen Seitengruppen oder organische Polymere, die ausschließlich über polare Gruppen an die Hauptkette des Polymeren gebundene langkettige n-Alkylseitengruppen mit 12 bis 36 Kohlenstoffatomen enthalten, mit der Maßgabe, daß diese langkettigen N-Alkylseitengruppen teilweise durch kürzerkettige n-Alkylseitengruppen, durch verzweigte Alkylseitengruppen mit gleicher oder niedrigerer Anzahl an Kohlenstoffatomen und/oder durch gleichlange oder kürzere Seitengruppen mit mindestens einer C-C-Mehrfachbindung ersetzt sind, eingesetzt werden.

Als Farbstoffe eignen sich vorzugsweise solche, die wasserunlöslich sind und für sich allein keine geordneten Strukturen an der Grenzfläche Wasser/luft bilden.

Als organische Polymere eignen sich sowohl Polykondensate, wie z.B. in γ-Stellung langkettig substituierte Polyglutamate und vorzugsweise in γ-Stellung unterschiedlich alkylsubstituierte Copolyglutamate, als auch ganz allgemein solche organischen Polymeren, die ausschließlich über polare Gruppen an die Hauptkette des Polymeren gebundene langkettige n-Alkylseitengruppen enthalten, mit der Maßgabe, daß diese langkettigen n-Alkylseitengruppen teilweise durch kürzerkettige n-Alkylseitengruppen, durch verzweigte Alkylseitengruppen mit gleicher oder niedrigerer Anzahl an Kohlenstoffatomen und/oder durch gleichlange oder kürzere Seitengruppen mit mindestens einer C-C-Mehrfachbindung ersetzt sind, beispielsweise also auch Copolymerisate mit langkettigen Seitengruppen. Als polare Gruppen kommen dabei die Gruppen

$$-O- \; , \; -\underset{\underset{O}{\|}}{C}- \; , \; -\underset{\underset{O}{\|}}{C}-O- \quad \text{oder} \quad -\underset{\underset{O}{\|}}{C}-NH- \quad \text{vorzugsweise die Gruppe} \quad -\underset{\underset{O}{\|}}{C}-O-$$

in Betracht.

Für das erfindungsgemäße Verfahren können als Copolymerisate insbesondere auch solche aus

(a) polymerisierten Einheiten einer n-Alkylestergruppen enthaltenden ethylenisch ungesättigten Verbindung mit mindestens 12 Kohlenstoffatomen im Alkylrest der Estergruppe und

(b) polymerisierten Einheiten mindestens einer weiteren von (a) verschiedenen Alkylestergruppen enthaltenden ethylenisch ungesättigten Verbindung, wobei der Alkylrest der Estergruppe entweder eine geringere Anzahl Kohlenstoffatome aufweist als der von (a), verzweigt ist oder mindestens eine C-C-Mehrfachverbindung enthält,

eingesetzt werden, wobei das Copolymerisat beispielsweise als Komponente (b) einen Ester der (Meth)acrylsäure einpolymerisiert enthalten kann, dessen Alkylrest der Estergruppe mindestens 4 Kohlenstoffatome kürzer ist als der n-Alkylrest der Estergruppe der Komponente (a).

Für das erfindungsgemäße Verfahren können als organische Polymere auch vorzugsweise Polykondensate mit helikaler Struktur eingesetzt werden.

Weiterhin sind für das erfindungsgemäße Verfahren als Polykondensate auch Copolykondensate aus γ-Alkyl-L-glutamat und γ-Alkyl'-L-glutamat, worin Alkyl für einen Alkylrest mit 1 bis 6 Kohlenstoffatomen und Alkyl' für einen Alkylrest mit 12 bis 36 Kohlenstoffatomen stehen, bevorzugt.

Dem erfindungsgemäßen Verfahren kann auch ein Temperprozeß angeschlossen werden.

Gegenstand der vorliegenden Erfindung sind auch Schichtelemente, die nach dem erfindungsgemäßen Verfahren unter Verwendung des homogenen Gemisches aus oleophilem Farbstoff und organischem Polymeren hergestellt wurden.

Zum erfindungsgemäßen Verfahren und zu den Einsatzstoffen ist im einzelnen folgendes auszuführen.

Unter den erfindungsgemäß einzusetzenden oleophilen Farbstoffen werden solche verstanden, die in Wasser unlöslich, in mit Wasser nicht mischbaren organischen Lösungsmitteln jedoch löslich sind, insbesondere solche, die für sich allein keine geordneten Strukturen an der Grenzfläche Wasser/Luft bilden.

Als Beispiele für geeignete oleophile Farbstoffe seien angeführt :

Farbstoffe auf Kohlenwasserstoffbasis und deren Derivate ohne ionische oder hydrophile Gruppen, beispielsweise Carotine, wie β-Carotin, Carotincarbonsäureester, wie β-Apo-8'-carotinsäureethylester (trans), oleophile Farbstoffe aus der Klasse der Sudanfarbstoffe, vorzugsweise Disazofarbstoffe, besonders solche, die durch mindestens eine Alkylgruppe (z.B. Methyl- oder Ethylgruppe) in der ortho-Stellung zur Azogruppe substituiert sind, beispielsweise "Ölrot O" (Oil Red C.I. Solvent Red 27 ; C.I.Nr. 26 125) oder "Fettrot bläulich" (Fat Red C.I. Solvent Red 10, C.I.Nr. 26 050) und andere Farbstoffe dieser Art (C.I. = Color Index der American Colors and Dyers Society).

Für das erfindungsgemäße Verfahren ungeeignet sind Farbstoffe mit ionischen Gruppen, wie z.B. Ethidiumbromid. Auch Farbstoffe mit überwiegendem Anteil an polaren Gruppen eignen sich weniger.

Der oleophile Farbstoff kann in geringen Mengen bis zu Mengen, in denen der flüssiganaloge Zustand des erfindungsgemäß mitzuverwendenden organischen Polymeren noch nicht gestört wird, eingesetzt werden.

Man kann den oleophilen Farbstoff als in den Polymerseitenketten des zur Ausbildung von Langmuir-Blodgett-Schichten geeigneten organischen Polymeren gelöst ansehen.

Als organische Polymere eignen sich sowohl Copolymerisate als auch Polykondensate.

Beispiele für Copolymerisate sind :

Polyvinylalkylether mit 12 bis 36 Kohlenstoffatomen in der n-Alkylkette, wie Polyvinyloctadecylether, dessen geradkettige Octadecylgruppen teilweise durch z.B. Hexadecyl-, Dodecyl-, Decyl-, Nonyl- oder Octyl-, Hexyl-, n-Butyl- oder Isobutylgruppen ersetzt sein können ;

entsprechende Copolymerisate von Polyvinylalkylketonen unterschiedlicher Kettenlänge ;

Poly-N-alkyl-acrylamide oder Poly-N-alkyl-methacrylamide, wobei die langkettigen n-Alkylgruppen 12 bis 36 Kohlenstoffatome enthalten können und teilweise durch n-Alkylreste geringerer Kettenlänge oder verzweigte Alkylreste ersetzt sind ;

Polymere Ester der Acrylsäure, Methacrylsäure oder anderer copolymerisierbarer α,β-ethylenisch ungesättigter Monocarbonsäuren mit geradkettigen, mindestens 12, vorzugsweise 16 bis 36 Kohlenstoffatome enthaltenden Alkylgruppen, wobei ein Teil dieser langkettigen n-Alkylgruppen durch n-Alkylgruppen mit um mindestens einem, vorzugsweise 2 bis 8 Kohlenstoffatomen kürzeren Alkylrest, durch verzweigte Alkylgruppen mit gleicher oder geringerer Kohlenstoffatomanzahl im Alkylrest oder durch Kohlenwasserstoffreste mit gleicher oder geringerer Anzahl an Kohlenstoffatomen, wobei diese Kohlenwasserstoffreste eine oder mehrere C-C-Mehrfachbindungen, beispielsweise —HC=CH— oder —C≡C—Gruppen enthalten, ersetzt sind ; die Einführung von C-C-Mehrfachbindungen kann zweckmäßigerweise durch polymeranaloge Umsetzung erfolgen.

Beispiele für langkettige n-Alkyl(meth)acrylate (a) sind Docosyl(meth)acrylat, Eicosyl(meth)acrylat, Octadecyl(meth)acrylat, Hexadecyl(meth)acrylat, Tetradecyl(meth)acrylat und Dodecyl(meth)acrylat.

In den erfindungsgemäß einzusetzenden Copolymerisaten sind derartige langkettige n-Alkyl(meth)acrylate teilweise durch (b)n-Alkyl(meth)acrylate mit kürzeren n-Alkylresten, durch solche mit verzweigten Alkylresten

oder durch solche mit -C-C-Mehrfachbindungen ersetzt.

Der Anteil der Komponenten (a) und (b) als einpolymerisierte Einheiten des Copolymeren kann in weiten Grenzen variieren und liegt im allgemeinen zwischen 50 bis 99,5 Mol% der Komponente (a) und 0,5 bis 50 Mol% der Komponente (b).

Bevorzugt sind Copolymerisate mit 80 bis 99,5, insbesondere 85 bis 99 Mol% der Komponente (a) und 0,5 bis 20, insbesondere 1 bis 15 Mol% der Komponente (b).

Besonders geeignet sind Copolymerisate des Octadecyl(meth)acrylats mit Hexadecyl(meth)acrylat, Dodecyl(meth)acrylat, Decyl(meth)acrylat, Nonyl(meth)acrylat, Octyl- oder Isooctyl(meth)acrylat, Hexyl(meth)acrylat, Butyl(meth)acrylat oder auch Methyl(meth)acrylat.

Es handelt sich hier also um Copolymerisate, wobei die Menge der modifizierend wirkenden Comonomeren (b) je nach dessen Kettenlänge variieren kann.

(Meth)acrylsäureestercopolymere sind bevorzugt.

Die erfindungsgemäß einzusetzenden Copolymerisate weisen im allgemeinen Polymerisationsgrade zwischen 10 und 200 auf. Bevorzugt sind isotaktische Copolymerisate.

Als Polykondensate eignen sich auch Homokondensate, beispielsweise solche langkettiger γ-Glutamate, wie die Polykondensate von γ-Octadecyl-L-glutamat.

Als Polykondensate mit unterschiedlichen Seitenketten kommen beispielsweise Polyester und insbesondere Polyamide in Betracht. Für Auswahl und Kombination der Seitenketten gilt im wesentlichen das bei den Copolymerisaten Gesagte. Unter den Polyamiden sind besonders die Polyglutamate zu nennen, die in γ-Stellung unterschiedliche Estergruppierungen enthalten. Bevorzugt sind Poly(γ-octadecyl-L-glutamate), deren Octadecylgruppen durch n-Alkylgruppen mit weniger als 18, vorzugsweise mit 1 bis 16 Kohlenstoffatomen oder entsprechende verzweigte Alkylreste oder Kohlenwasserstoffreste mit C-C-Mehrfachbindungen teilweise, z.B. zu 2 bis 80 Mol% ersetzt sind.

Beispielhaft für derartige Polykondensate sei das Copolykondensat aus γ-Methyl-L-glutamat und γ-Octadecyl-L-glutamat genannt. Die Herstellung derartiger Copolykondensate kann durch polymeranaloge Umsetzung der polymeren Homokondensate, beispielsweise durch teilweise Umesterung des Poly-γ-methyl-L-glutamats mit Stearylalkohol erfolgen (vgl. J. Watanabe, Y. Fukuda, R. Gehani and I. Nematyn, Macromolecules 17 (1984), Seiten 1004ff).

Die Langmuir-Blodgett-Technik, die dazu geeigneten Apparaturen und die Voraussetzungen für die Durchführbarkeit dieser Methode sind bekannt, beispielsweise beschrieben in G.L. Gaines, "Insoluble Monolayers at Liquid-Gas-Interfaces", Interscience Publishers, 1966, insbesondere sei auf die Seiten 44 bis 68, 326 bis 330 und 336 bis 340 dieser Monographie hingewiesen.

Die Übertragung der Monoschichten erfolgt im allgemeinen im "flüssiganalogen Zustand".

Die organischen Polymeren werden zweckmäßigerweise in leichtflüchtigen organischen Lösungsmitteln, wie Methylenchlorid, Chloroform, Benzol, Hexan oder Ethylacetat in Konzentrationen von 0,01 bis 1 Gew.% gelöst, das Lösungsmittel aus der auf die Wasseroberfläche aufgebrachten Polymerlösung durch Verdunsten entfernt und die Monoschicht vor der Übertragung auf den festen Schichtträger in üblicher Weise vorkomprimiert.

Man arbeitet im allgemeinen bei Temperaturen zwischen 5 und 35, vorzugsweise 10 bis 30°C.

Als Schichtträger für die erfindungsgemäßen Schichtelemente, auf die die dünnen, geordneten Schichten wohldefinierter Struktur von organischen Polymeren aufgebracht werden, kommen beliebige feste, vorzugsweise dimensionsstabile, Substrate aus den unterschiedlichsten Materialien in Betracht. Die als Schichtträger dienenden Substrate können z.B. transparent oder lichtundurchlässig, elektrisch leitend oder isolierend sein. Die Oberfläche des Substrats, auf die die dünne Schicht der organischen Polymeren aufgebracht wird, kann hydrophobiert sein. Das Substrat kann aus einem hydrophoben Material bestehen oder die Oberfläche des Substrats kann vor dem Aufbringen der dünnen Schicht des organischen Polymeren in an sich bekannter Weise durch eine geeignete Vorbehandlung hydrophobiert werden. Die zu beschichtende hydrophobe Oberfläche der Substrate sollte möglichst rein sein, damit die Ausbildung einer dünnen, geordneten Schicht, insbesondere monomolekularer bzw. multimolekularer Schichtstruktur, nicht gestört wird. Beispielsweise kann bei Anwesenheit von oberflächenaktiven Stoffen auf der zu beschichtenden Oberfläche der Substrate die Ausbildung eines guten Monomolekular- bzw. Multimolekular-Films beeinträchtigt werden. Es ist jedoch möglich, daß die als Schichtträger dienenden Substrate auf ihrer zu beschichtenden Oberfläche vor dem Aufbringen der dünnen Schichten des organischen Polymeren zunächst mit einer Zwischenschicht versehen werden, beispielsweise zur Erzielung einer hohen Haftung zwischen der festen, dünnen Schicht des organischen Polymeren und dem Substrat.

Als Materialien für die als Schichtträger dienenden Substrate können beispielsweise Metalle, wie etwa Gold, Platin, Nickel, Palladium, Aluminium, Chrom, Niob, Tantal, Titan oder Stahl verwendet werden. Andere geeignete Materialien für die Substrate sind u.a. Kunststoffe, wie z.B. Polyester, etwa Polyethylenterephthalat

oder Polybutylenterephthalat, Polyvinylchlorid, Polyvinylidenchlorid oder Polytetrafluorethylen.

Gleichermaßen kommen beispielsweise Silicium, Glas, Siliciumdioxid, keramische Werkstoffe oder Celluloseprodukte als Materialien für die Substrate in Betracht. Die Oberfläche von Glassubstraten kann — sofern erforderlich — in an sich bekannter Weise, beispielsweise durch Umsetzung mit Alkylsilanen, hydrophobiert werden. Die Auswahl der Substratmaterialien richtet sich u.a. vornehmlich nach dem Verwendungszweck der erfindungsgemäßen Schichtelemente. Für optische Elemente werden in aller Regel transparente, lichtdurchlässige Substrate als Schichtträger eingesetzt. Werden die erfindungsgemäßen Schichtelemente beispielsweise in der Elektrotechnik oder bei elektrochemischen Prozessen verwendet, dienen als Substrate insbesondere elektrisch leitfähige Materialien, wie Metalle, oder Materialien mit elektrisch leitfähigen, insbesondere metallischen, Oberflächenschichten, wie beispielsweise metallisierte Kunststoffolien.

Die als Schichtträger für die erfindungsgemäßen Schichtelemente dienenden Substrate können in Abhängigkeit vom Verwendungszweck beliebige Formen aufweisen. Beispielsweise können sie film-, folien-, platten-, bandförmig oder auch zylinderförmig sein oder unter beliebigen anderen Formen ausgewählt werden. Im allgemeinen wird es sich bei den Schichtträgern um flache, ebene Substrate handeln, wie z.B. Filme, Folien, Platten, Bänder oder Bleche. Die zu beschichtende Oberfläche der Substrate ist vorzugsweise glatt, wie es für die Herstellung von dünnen geordneten Schichten mit wohldefinierter Struktur, insbesondere Monomolekularfilmen oder Multimolekularfilmen, üblich ist. Bei den flachen ebenen Substraten, wie Filmen, Folien, oder Bändern, können die erfindungsgemäßen dünnen, geordneten Schichten entweder nur auf eine oder auch auf beide Oberflächen des Substrats aufgebracht werden.

Es kann vorteilhaft sein, unmittelbar nach der Übertragung der Monomolekularfilme von der Wasseroberfläche auf das Substrat das hergestellte erfindungsgemäße Schichtelement bei erhöhten Temperaturen, im allgemeinen im Bereich von 50 bis 200°C, vorzugsweise im Bereich von etwa 100 bis 150°C, zu tempern. Der Tempervorgang als solcher kann je nach Art und Dicke der erfindungsgemäßen Schichtelemente beispielsweise zwischen einigen Minuten bis einigen Stunden dauern.

Als organische Polymere kommen auch metallomakrocyclische Polymere, wie Phthalocyaninatpolymetalloxane in Frage, wie sie beispielsweise in DE-A-3615832 beschrieben werden.

Das Mengenverhältnis oleophiler Farbstoff/organisches Polymeres kann in den oben bereits erwähnten Grenzen schwanken. Pro Polymerwiederholungseinheit (= Mol Grundeinheit des Polymeren) können je nach Farbstoffsystem z.B. bis zu etwa 0,5 bis 1 Mol oleophiler Farbstoff zum Einsatz kommen, wobei der niedrigere Wert (0,5) beispielsweise für Carotincarbonsäureester, der höhere Wert (1) für oleophile Disazofarbstoffe in Frage kommt. Selbstverständlich können auch beliebig geringere Mengen an oleophilen Farbstoffen sowie gegebenenfalls auch Farbstoffgemische für das erfindungsgemäße Verfahren zum Einsatz gelangen.

Nach dem erfindungsgemäßen Verfahren lassen sich reproduzierbar sehr dünne Farbstoff/Polymer-Schichten herstellen, die anisotrop sind, keine Domänenstruktur aufweisen und deren Farbintensität sich je nach Anzahl der aufgebrachten Langmuir-Blodgett-Schichten steuern läßt. Das erfindungsgemäße Verfahren erlaubt die Y-Übertragung (bis zu 40 und mehr Schichten) bei konstantem Übertragungsverhältnis.

Die nach dem erfindungsgemäßen Verfahren hergestellten Schichten lassen sich sehr vorteilhaft für Filter im Bereich der Optik verwenden.

Durch einen sich der Herstellung der erfindungsgemäßen Schichtelemente anschließenden Temperschritt können die Eigenschaften der erfindungsgemäßen Schichtelemente stabilisiert bzw. auch gezielt variiert werden.

Die Erfindung wird durch die nachfolgenden Beispiele näher erläutert. Die in den Beispielen genannten Teile und Prozente beziehen sich, sofern nicht anders angegeben, auf das Gewicht.

## Synthese der Polymethacrylate

Isotaktisches Copolymerisat aus Octadecylmethacrylat und Hexadecylmethacrylat wurde anionisch mit Phenylmagnesiumbromid als Initiator polymerisiert (nach dem Verfahren von W.E. Goode et al., J.Pol.Sc. 46, 317 (1960), 47, 75 (1960). Nach der Polymerisation wurde das Copolymerisat durch Ausfällen in Methanol aufgearbeitet und durch mehrfaches Umfällen aus Toluol in Methanol gereinigt. Das Copolymerisat wurde schließlich unter Vakuum bei Raumtemperatur getrocknet.

## Synthese der Polypeptide

### 1. Copolykondensat aus γ-Methyl-L-glutamat und γ-Stearyl-L-glutamat

Das Poly-γ-methyl-L-glutamat wurde aus der N-Carboxyanhydridverbindung des ω-Methylesters der L-Glutaminsäure durch Polymerisation mit Initiator Triethylamin in Dioxan bei Raumtemperatur dargestellt. Die N-Carboxyanhydridverbindung war durch Phosgenierung des ω-Methylesters der L-Glutaminsäure in Dioxan hergestellt worden (J.L. Houben, A. Fissi, D. Baccrola, N. Rosato and O. Pieroni and F. Ciardelli, Int.J.Biol. Macromol. 5, 94 (1983)). Der Grad der Stearylsubstitution (35%) wurde durch Elementaranalyse bestimmt.

Das Copolykondensat wurde aus Poly-γ-methyl-L-glutamat durch Umsetzung mit Stearylalkohol bei 60°C hergestellt. Als Katalysator diente p-Toluolsulfonsäure (J. Watanabe, Y. Fukuda, R. Gehani and I. Nematyu, Macromolecules 17, 1004 (1984)). Das Molekulargewicht (12000) wurde durch GPC mit Polystyrol als Standard bestimmt.

2. Poly(γ-stearyl-L-glutamat)

Das Homopolymer wurde wie das Poly-γ-methyl-L-glutamat hergestellt. Der ω-Stearylester der L-Glutaminsäure wurde aus L-Glutaminsäure und Stearylalkohol in t-Butanol bei 80°C (als Katalysator konzentrierte Schwefelsäure) dargestellt (Neth. Appl. 6, 500, 089, July 7, 1965 ; CA, 64, 2159g (1966).

Molekulargewichte der Polymeren:

| | $\bar{M}n \times 10^3$ | |
|---|---|---|
| isotaktisches Copolymerisat aus Octadecylmethacrylat und Hexadecylmethacrylat | 8 | (mit 5 Mol% Hexadecylmethacrylateinheiten) |
| Poly(-γ-octadecyl-L-glutamat) | 3* | |
| Copolycokondensat aus γ-Octadecyl-L--glutamat und γ-Methyl-L-glutamat | ≈ 12* | (mit 35 Mol% Octadecyl-L-glutamat-Einheiten) |

* aus GPC bezogen auf Polystyrol

Beispiel 1

Auf der Wasseroberfläche einer Lauda Langmuir-Filmwaage wurde 100 µl einer 0,1%igen Lösung eines Copolykondensats aus γ-Octadecyl-L-glutamat und γ-Methyl-L-glutamat und der molar entsprechenden Menge Fat Red C.I. Solvent Red 19 ; C.I.Nr. 26 050 in Chloroform (Uvasol-Qualität) nach dem üblichen Verfahren bei 25°C gespreitet. Nach Verdunstung des Lösungsmittels wurde die Schicht komprimiert, bis der Oberflächendruck 20 mN/m war. Bei diesem Druck wurde die Schicht stabilisiert (≈1 Std.). Als die eingenommene Oberfläche konstant war, wurde ein Quarzplättchen, das mit Hexamethyldisilazan hydrophobiert war, vertikal nach dem Langmuir-Blodgett-Verfahren eingetaucht und mit einer Geschwindigkeit von 25 mm/Min aufgezogen. Die erste Schicht wurde beim Eintauchen übertragen, die nächste Schicht wurde beim Aufziehen übertragen (Y-Übertragung). Die Übertragung bei den nächsten Cyclen wurde mit einem Schreiber verfolgt. Dabei waren die eingestellten Pausen : eingetaucht 34 Sekunden, außer Wasser 68 Sekunden. Auf diese Weise war es möglich, mindestens 49 Schichten mit konstantem Übertragungsverhältnis anzubringen. Es wurde eine völlig homogene Färbung erhalten, wobei der Farbstoff in der Schicht orientiert war.

Vergleichsbeispiel 1

Es wurde wie in Beispiel 1 gearbeitet, mit dem Unterschied, daß als Farbstoff die entsprechende molare Menge Ethidiumbromid eingesetzt wurde. Der Farbstoff wurde nicht in die Langmuir-Blodgett-Matrix eingebaut.

Beispiel 2

Es wurde wie in Beispiel 1 beschrieben gearbeitet, mit dem Unterschied, daß als oleophiler Farbstoff β-Carotin (molar entsprechende Menge) benutzt wurde, die Temperatur 20°C und der Druck 25 mN/m betrug. Das Ergebnis waren homogen gefärbte Schichten, wobei der Farbstoff orientiert war.

Beispiel 3

Es wurde wie in Beispiel 1 beschrieben gearbeitet, mit dem Unterschied, daß als organisches Polymer das Homopolymer Poly(γ-octadecyl-L-glutamat) benutzt wurde. Es wurden gleichmäßig gefärbte Schichten erhalten, wobei der Farbstoff orientiert war.

Beispiel 4

Es wurde wie in Beispiel 1 beschrieben gearbeitet, mit dem Unterschied, daß als oleophiler Farbstoff Ölrot O (C.I. Solvent Red 27 ; C.I.Nr. 26 125) in der der molaren Grundeinheit des Copolykondensats entsprechenden molaren Menge eingesetzt wurde. Es wurden homogene, gleichmäßig gefärbte Schichten erhalten, wobei der Farbstoff orientiert war.

Beispiel 5

Es wurde wie in Beispiel 1 beschrieben gearbeitet, mit dem Unterschied, daß als oleophiler Farbstoff β-Apo-8′-carotinsäure-ethylester (trans) in einer 0,5 molaren Menge, bezogen auf Grundmoleinheit des Copolykondensats eingesetzt wurde. Auch hier wurden homogen gefärbte Schichten mit darin orientiertem Farbstoff erhalten.

Beispiel 6

Es wurde wie in Beispiel 1 beschrieben gearbeitet, mit dem Unterschied, daß als oleophiler Farbstoff β-Carotin, und zwar in einer Menge von 2 Mol.% und als Polymer ein Copolymerisat aus Octadecylmethacrylat und Hexadecylmethacrylat (siehe obige Tabelle) eingesetzt wurde. Der Oberflächendruck betrug 10 mN/m. Es wurden gleichmäßig gefärbte homogene Schichten erhalten.

**Patentansprüche**

1. Verfahren zur Herstellung von dünnen Schichten mit einer definierten Konzentration an Farbstoff pro Flächeneinheit, dadurch gekennzeichnet, daß ein oleophiler Farbstoff ohne ionische Gruppen, der in organischen, mit Wasser nicht mischbaren Lösungsmitteln löslich ist, und ein organisches Polymeres in einem organischen, mit Wasser nicht mischbaren Lösungsmittel gelöst, an der Grenzfläche Wasser/Luft gespreitet und nach Verdunstung des Lösungsmittels in üblicher Weise nach der Langmuir-Blodgett-Technik auf einen festen Schichtträger übertragen wird, wobei als organische Polymere Polykondensate mit langkettigen Seitengruppen oder organische Polymere, die ausschließlich über polare Gruppen an die Hauptkette des Polymeren gebundene langkettige n-Alkylseitengruppen mit 12 bis 36 Kohlenstoffatomen enthalten, mit der Maßgabe, daß diese langkettigen n-Alkylseitengruppen teilweise durch kürzerkettige n-Alkylseitengruppen, durch verzweigte Alkylseitengruppen mit gleicher oder niedriger Anzahl an Kohlenstoffatomen und/oder durch gleichlange oder kürzere Seitengruppen mit mindestens einer C-C-Mehrfachbindung ersetzt sind, eingesetzt werden.

2. Verfahren nach Anspruch 1, dadurch gekennzeichnet, daß als Farbstoffe solche verwendet werden, die wasserunlöslich sind und für sich allein keine geordneten Strukturen an der Grenzfläche Wasser/Luft bilden.

3. Verfahren nach einem der Ansprüche 1 oder 2, dadurch gekennzeichnet, daß als organische Polymere in γ-Stellung langkettig substituierte Polyglutamate verwendet werden.

4. Verfahren nach einem der Ansprüche 1 oder 2, dadurch gekennzeichnet, daß die polaren Gruppen

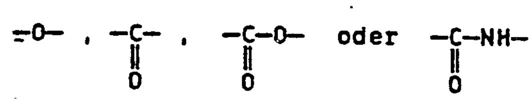

sind.

5. Verfahren nach einem der Ansprüche 1, 2 oder 4, dadurch gekennzeichnet, daß als organische Polymere mit langkettigen Seitengruppen Copolymerisate eingesetzt werden.

6. Verfahren nach einem der Ansprüche 1 bis 3 oder 5, dadurch gekennzeichnet, daß als Polykondensate mit langkettigen Seitengruppen in γ-Stellung unterschiedlich alkylsubstituierte Copolyglutamate eingesetzt werden.

7. Verfahren nach Anspruch 4, dadurch gekennzeichnet, daß als Copolymerisate solche aus

(a) polymerisierten Einheiten einer n-Alkylestergruppen enthaltenden ethylenisch ungesättigten Verbindung mit mindestens 12 Kohlenstoffatomen im Alkylrest der Estergruppe und

(b) polymerisierten Einheiten mindestens einer weiteren von (a) verschiedenen Alkylestergruppen enthaltenden ethylenisch ungesättigten Verbindung, wobei der Alkylrest der Estergruppe entweder eine geringere Anzahl Kohlenstoffatome aufweist als der von (a), verzweigt ist oder mindestens eine C-C-Mehrfachbindung enthält,
eingesetzt werden

8. Verfahren nach Anspruch 7, dadurch gekennzeichnet, daß als Copolymerisate solche eingesetzt werden, die als Alkylestergruppen enthaltende polymerisierbare ethylenisch ungesättigte Verbindungen Acrylsäure- oder Methacrylsäurealkylester einpolymerisiert enthalten.

9. Verfahren nach einem der Ansprüche 4, 7 oder 8, dadurch gekennzeichnet, daß das als organisches Polymeres eingesetzte Copolymerisat einen Polymerisationsgrad von 10 bis 200 aufweist.

10. Verfahren nach einem der Ansprüche 4 oder 7 bis 9, dadurch gekennzeichnet, daß das als organisches Polymeres eingesetzte Copolymerisat isotaktisch ist.

11. Verfahren nach einem der Ansprüche 7 bis 10, dadurch gekennzeichnet, daß das Copolymerisat als Komponente (b) einen Ester der (Meth)-acrylsäure einpolymerisiert enthält, dessen Alkylrest der Estergruppe um mindestens 4 Kohlenstoffatome kürzer ist als der n-Alkylrest der Estergruppe der Komponente (a).

12. Verfahren nach einem der Ansprüche 1, 5 oder 6, dadurch gekennzeichnet, daß als organische Polymere Polykondensate mit helikaler Struktur eingesetzt werden.

13. Verfahren nach einem der Ansprüche 6 oder 12, dadurch gekennzeichnet, daß als Polykondensat ein Copolykondensat aus γ-Alkyl-L-glutamat und γ-Alkyl'-L-glutamat, worin Alkyl für einen Alkylrest mit 1 bis 6 Kohlenstoffatomen und Alkyl' für einen Alkylrest mit 12 bis 36 Kohlenstoffatomen stehen, eingesetzt wird.

14. Verfahren nach Anspruch 13, dadurch gekennzeichnet, daß als Polykondensat ein Copolykondensat aus γ-Methyl-L-glutamat und γ-Octadecyl-L-glutamat eingesetzt wird.

15. Verfahren nach einem der vorhergehenden Ansprüche, dadurch gekennzeichnet, daß sich nach dem Aufbringen der dünnen Schichten auf den festen Schichtträger ein Temperprozeß anschließt.

16. Schichtelement mit einem Schichtträger und mindestens einer hierauf aufgebrachten festen, dünnen geordneten Schicht definierter einheitlicher und regelmäßiger Struktur mit gleichförmiger Molekülorientierung in einer Richtung von einem in einem organischen, mit Wasser nicht mischbaren Lösungsmittel löslichen organischen Polymeren und einem oleophilen Farbstoff, dadurch gekennzeichnet, daß es nach einem Verfahren gemäß einem der Ansprüche 1 bis 15 hergestellt wurde.

## Claims

1. A process for preparing a thin film containing a defined concentration of dye per unit area, which comprises spreading an oleophilic dye which does not have any ionic groups and is soluble in an organic water-immiscible solvent, and an organic polymer dissolved in an organic water-immiscible solvent as a thin film at the water/air interface and, after the solvent has evaporated, transferring said film in a conventional manner by the Langmuir-Blodgett technique to a solid base material, wherein the organic polymer used contains long-chain n-alkyl side groups of 12 to 32 carbon atoms bonded to the main chain of the polymer via polar groups only, with the proviso that these long-chain n-alkyl side groups are partly replaced by shorter-chain n-alkyl side groups, by branched alkyl side groups having the same or a smaller number of carbon atoms and/or by equally long or shorter side groups having at least one C-C multiple bond.

2. A process as claimed in claim 1, wherein the dye used is water-insoluble and on its own does not form ordered structures at the water/air interface.

3. A process as claimed in claim 1 or 2, wherein the polar groups are

$$-O-,\ -\underset{\underset{O}{\|}}{C}-,\ -\underset{\underset{O}{\|}}{C}-O-\ \text{or}\ -\underset{\underset{O}{\|}}{C}-NH-.$$

4. A process as claimed in any of claims 1 to 3, wherein the organic polymer having long-chain side groups is a copolymer.

5. A process as claimed in any of claims 1 to 3, wherein the organic polymer used is a polyglutamate with long-chain substitution in the c-position.

6. A process as claimed in any of claims 1 to 3 or 5, wherein the polymer having long-chain side groups is a copolyglutamate with different alkyl substituents in the c-position.

7. A process as claimed in claim 4, wherein the copolymer used comprises

(a) polymerized units of an ethylenically unsaturated compound containing n-alkyl ester groups having no fewer than 12 carbon atoms in the alkyl radical of the ester group and

(b) polymerized units of at least one further ethylenically unsaturated compound different from (a) which contains alkyl ester groups in which the alkyl radical of the ester group either has fewer carbon atoms than that of (a), or is branched or contains at least C-C multiple bond.

8. A process as claimed in claim 7, wherein, in the copolymer used, the polymerizable ethylenically unsaturated compound containing alkyl ester groups is an alkyl acrylate or methacrylate present as copolymerized units.

9. A process as claimed in any of claims 4, 7 or 8, wherein the copolymer used as the organic polymer has a degree of polymerization of from 10 to 200.

10. A process as claimed in any of claims 4 or 7 to 9, wherein the copolymer used as the organic polymer is isotactic.

11. A process as claimed in any of claims 7 to 10, wherein the copolymer contains as component (b) copolymerized units of an ester of (meth)acrylic acid where the alkyl radical of the ester group is no fewer than 4 carbon atoms shorter than the n-alkyl radical of the ester group of component (a).

12. A process as claimed in any of claims 1, 5 or 6, wherein the organic polymer used is a polycondensate of helical structure.

13. A process as claimed in claim 6 or 12, wherein the polycondensate used is a copolycondensate of c-alkyl L-glutamate and c-alkyl' L-glutamate where alkyl is alkyl of from 1 to 6 carbon atoms and alkyl' is alkyl of from 12 to 36 carbon atoms.

14. A process as claimed in claim 13, wherein the polycondensate used is a copolycondensate of c-methyl L-glutamate and c-octadecyl L-glutamate.

15. A process as claimed in any one of the preceding claims, wherein the application of the thin film to the solid base material is followed by a heat treatment.

16. A layer element comprising a base material and applied thereto at least one solid, thin, ordered layer of defined and uniform regular structure with uniform molecular orientation in one direction, of an organic polymer soluble in an organic water-immiscible solvent and an oleophilic dye, prepared by a process as claimed in any of claims 1 to 15.

## Revendications

1. Procédé de préparation de couches minces à concentration définie en colorant par unité de surface, caractérisé par le fait qu'on dissout dans un solvant organique, non miscible avec l'eau, un colorant oléophile sans groupes ioniques, qui est soluble dans des solvants organiques non miscibles avec l'eau, et un polymère organique, on étend la solution à l'interface eau/air et, après évaporation du solvant, de manière usuelle, selon la technique de Langmuir-Blodgett, on la transfère sur un substratum solide, les polymères organiques utilisés étant ceux qui contiennent exclusivement des groupes latéraux n-alkyle (ayant 12 à 32 atomes de carbone), à longue chaîne, liés à la chaîne principale du polymère par des groupes polaires, sous-réserve que ces groupes latéraux n-alkyle, à longue chaîne, soient partiellement substitués par des groupes latéraux n-alkyle à chaîne plus courte, par des groupes latéraux alkyle ramifiés d'un nombre d'atomes de carbone égal ou supérieur et/ou par des groupes latéraux de longueur égale ou plus courte ayant au moins une liaison multiple C-C.

2. Procédé selon la revendication 1, caractérisé par le fait que sont utilisés comme colorants ceux qui sont insolubles dans l'eau, et en tant que tels, ne forment pas de structures ordonnées à l'interface eau/air.

3. Procédé selon la revendication 1, caractérisé par le fait que les groupes polaires sont

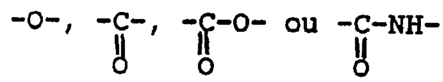

4. Procédé selon l'une des revendications 1 à 3, caractérisé par le fait que sont utilisés, comme polymères organiques à groupes latéraux à longue chaîne, des copolymérisats.

5. Procédé selon l'une des revendications 1 à 3, caractérisé par le fait que, comme polymères organiques, on utilise les polyglutamates substitués par les longues chaînes en position γ.

6. Procédé selon l'une des revendications 1 à 3 ou 5, caractérisé par le fait que, comme polymères à groupes latéraux à longue chaîne, sont utilisés des copolyglutamates à substitutions alkyle différentes en position γ.

7. Procédé selon la revendication 4, caractérisé par le fait que, comme copolymérisats, on utilise ceux provenant de

a) motifs polymérisés d'un composé insaturé éthyléniquement, contenant des groupes ester de n-alkyle et ayant au moins 12 atomes de carbone dans le reste alkyle du groupe ester et
b) motifs polymérisés d'au moins un autre composé insaturé éthyléniquement contenant des groupes ester d'alkyles différent de a), le reste alkyle du groupe ester possédant un nombre d'atomes de carbone, inférieur à celui de a), est ramifié ou contient au moins une liaison multiple C-C.

8. Procédé selon la revendication 7, caractérisé par le fait que l'on utilise, comme copolymérisats, ceux qui contiennent en polymérisation, comme composés insaturés éthyléniquement, polymérisables, contenant des groupes ester d'alkyle, des esters alkyliques d'acide acrylique ou d'acide méthacrylique.

9. Procédé selon l'une des revendications 4, 7 ou 8, caractérisé par le fait que le copolymérisat utilisé comme polymère organique possède un degré de polymérisation de 10 à 200.

10. Procédé selon l'une des revendications 4 ou 7 à 9, caractérisé par le fait que le copolymérisat utilisé comme polymère organique est isotactique.

11. Procédé selon l'une des revendications 7 à 10, caractérisé par le fait que le copolymérisat contient en polymérisation, comme composant (b), un ester de l'acide (méth)acrylique dont le reste alkyle du groupe ester est plus court d'au moins 4 atomes de carbone que le reste n-alkyle du groupe ester du composant (a).

12. Procédé selon l'une des revendications 1, 5 ou 6, caractérisé par le fait que l'on utilise comme polymères organiques des polycondensats à structure hélicoïdale.

13. Procédé selon l'une des revendications 6 ou 12, caractérisé par le fait que l'on utilise, comme polycondensat, un copolycondensat de L-glutamate de γ-alkyle et de L-glutamate de γ-alkyle*, où alkyle est mis pour un reste alkyle de 1 à 6 atomes de carbone et alkyle* est mis pour un reste alkyle de 12 à 36 atomes de carbone.

14. Procédé selon la revendication 13, caractérisé par le fait qu'on utilise, comme polycondensat, un copolymérisat de L-glutamate de γ-méthyle et de L-glutamate de γ-octadécyle.

15. Procédé selon l'une des revendications précédentes, caractérisé par le fait qu'après l'application de la couche mince sur le substratum solide, suit un processus de traitement thermique.

16. Elément stratifié comportant un substratum et, appliqué sur lui, au moins une couche ordonnée mince, solide, de structure régulière et unitaire, définie, d'orientation moléculaire uniforme dans une direction, d'un polymère organique soluble dans un solvant organique, non miscible avec l'eau et d'un colorant, oléophile, caractérisé par le fait qu'il a été préparé par un procédé selon l'une des revendications 1 à 15.